# EUROPEAN PATENT APPLICATION

(11) **EP 2 058 749 A1**
(43) Date of publication of application: **13.05.2009**
(21) Application number: 07793063.4
(22) Date of filing: 28.08.2007
(51) Int. Cl.: G06F 21/22, F24F 11/02

(54) **APPARATUS FOR ENABLING FUNCTIONS TO BE VALID IN PLURALITY OF DEVICES, NETWORK SYSTEM, METHOD, AND COMPUTER PROGRAM**

(30) Priority: 31.08.2006 JP 2006235394
(71) Applicant: Daikin Industries, Ltd., Osaka-shi, Osaka 530-8323 (JP)
(72) Inventor: OGURA, Takanori, Kusatsu-shi, Shiga 525-8526 (JP)
(74) Representative: Goddar, Heinz J.
(86) International application number: PCT/JP2007/066619
(87) International publication number: WO 2008/026570

(57) **Abstract**

An apparatus (10) is an apparatus including a plurality of devices and configured to enable a specified function of a first device (11) among the plurality of devices by a first license key distributed by a licenser (20). The apparatus (10) includes a key input unit (13a) and a key generation unit (11b). The key input unit (13a) allows the first license key to be input. A second license key is generated based on the first license key and specific information on a second device (12) among the plurality of devices. The apparatus (10) further enables the specified function of the second device (12) by the second license key. Accordingly, it is possible to easily and reliably enable a function of each device of an apparatus by a single license key, even if the apparatus includes a plurality of devices.

## Description

### TECHNICAL FIELD

The present invention relates to an apparatus, a network system, a method, and a computer program for enabling functions of a plurality of devices.

### BACKGROUND ART

Conventionally, there is a method in which a device is equipped with a full set of programs that are installed in advance and only necessary functions are enabled at the point of use by inputting a license key and the like, and such a method is carried out for the purpose of protecting copyright of software and separately providing optional functions (for example, see the documents such as Patent Document 1).

<Patent Document 1>
Japanese Patent Application Publication No. 2002-163505

### DISCLOSURE OF THE INVENTION

### <OBJECT TO BE ACHIEVED BY THE PRESENT INVENTION>

A license key is usually generated based on specific information on a device (such as a serial number). However, with a type of system in which a plurality of devices collaboratively operate, a system malfunction will occur unless each device enables a function in common with the others. Prevention of such a malfunction requires the work of issuing a license key to each device and registering the license key to the device. However, the key issuing work and the key inputting work need to be done for the number of devices, which is a complicated process.

Therefore, it is an object of the present invention to allow a function of each device of an apparatus to be easily and reliably enabled by a single license key even if the apparatus includes a plurality of devices.

### <MEANS TO ACHIEVE THE OBJECT>

An apparatus according to a first aspect of the present invention is an apparatus including a plurality of devices and configured to enable a specified function of a first device among the plurality of devices by a first license key distributed by a licenser. The apparatus includes a key input unit and a key generation unit. The key input unit allows the first license key to be input. The key generation unit generates a second license key based on the first license key and specific information on a second device among the plurality of devices. The specified function of the second device is enabled by the second license key.

Accordingly, it is possible to easily and reliably enable a function of each device of an apparatus by a single license key, even if the apparatus includes a plurality of devices.

An apparatus according to a second aspect of the present invention is the apparatus according to the first aspect of the present invention, and the apparatus includes a key conversion unit that reversely converts the input first license key. Further, the first license key is generated based on information on the specified function and specific information on the first device, and the key conversion unit reversely converts the input first license key and reads out the information on the specified function.

Accordingly, the second license key can be generated based on the information on the specified function, and it is possible to simply and reliably enable a function of each device by a single license key.

An apparatus according to a third aspect of the present invention is the apparatus according to the second aspect of the present invention, wherein the first license key is generated further based on number information regarding the number of available devices among the plurality of devices, and the key conversion unit further reads out the number information regarding the number of available devices by the reverse conversion. The key generation unit decrements the number information to generate the second license key.

Accordingly, the number information on the available devices is decremented each time a second license key is generated, and thus it is possible to prevent generation of an unlimited number of second license keys.

An apparatus according to a fourth aspect of the present invention is the apparatus according to the first aspect of the present invention, wherein the key generation unit accesses the licenser and obtains authentication information in order to generate the second license key.

Accordingly, it is possible to prevent generation of unlimited number of second license keys and to improve security against unauthorized usage.

An apparatus according to a fifth aspect of the present invention is the apparatus according to the first aspect of the present invention, wherein the first device controls the second device.

Accordingly, it is possible to efficiently operate the entire apparatus and to improve tolerance for design change of the apparatus.

An apparatus according to a sixth aspect of the present invention is the apparatus according to the fifth aspect of the present invention, wherein the specified function relates to air conditioning control, and the first device and the second device control an air conditioning unit.

Accordingly, it is possible to efficiently manage the air conditioning control and to improve tolerance for design change of the apparatus.

An apparatus according to a seventh aspect of the present invention is the apparatus according to the first aspect of the present invention, wherein the first license key is distributed for each specified function.

Accordingly, each function can be safely and easily traded between a user and the licenser.

An apparatus according to an eighth aspect of the present invention is the apparatus according to the second aspect of the present invention, wherein the key conversion unit is provided to the first device, and the key generation unit is provided to a third device other than the first device and the second device.

Accordingly, because the key generation unit is provided independent from the key conversion unit, it is possible to improve security.

An apparatus according to a ninth aspect of the present invention is the apparatus according to the first aspect of the present invention, wherein the key generation unit obtains the specific information on the second device from the first device.

Accordingly, because the specific information on one device is obtained from another device, it is possible to further improve security.

A network system according to a tenth aspect of the present invention includes the apparatus of the first aspect of the present invention and the licenser capable of communicating with the apparatus. In this network system, further, the key generation unit accesses the licenser in order to generate the second license key, and the licenser stores user information of the apparatus and transmits authentication information to the key generation unit based on the user information. Here, the user information includes: user specific information, device information, information on the function, and the like that are stored in the licenser. The term "authentication information" used herein refers to a judgment result indicating whether or not it is acceptable to generate the second license key upon checking the contents of the access against the user information.

Accordingly, it is possible to easily and reliably enable a function of each device of an apparatus by a single license key, even if the apparatus includes a plurality of devices. Also, it is possible to prevent generation of an unlimited number of license keys and to improve security against unauthorized usage.

A network system according to an eleventh aspect of the present invention is the network system according to the tenth aspect of the present invention, wherein the licenser is an air conditioning management center, the apparatus is an air conditioning apparatus, and the first device and the second device control an air conditioning unit.

Accordingly, it is possible to efficiently and safely manage the air conditioning control.

A method according to a twelfth aspect of the present invention is a method for enabling a specified function of a first device among a plurality of devices by a first license key distributed by a licenser, and includes first through third steps. In the first step, the first license key is input. In the second step, a second license key is generated based on the first license key and specific information on a second device among the plurality of devices. In the third step, the specified function of the second device is enabled by the second license key.

Accordingly, it is possible to easily and reliably enable a function of each device of an apparatus by a single license key, even if the apparatus includes a plurality of devices.

A computer program according to a thirteenth aspect of the present invention is a method for enabling a specified function of a first device among a plurality of devices by a first license key distributed by a licenser, and includes first through third steps. In the first step, the first license key is input. In the second step, a second license key is generated based on the first license key and specific information on a second device among the plurality of devices. In the third step, the specified function of the second device is enabled by the second license key.

Accordingly, it is possible to easily and reliably enable a function of each device of an apparatus by a single license key, even if the apparatus includes a plurality of devices.

### <EFFECTS OF THE INVENTION>

With the apparatus according to the first aspect of the present invention, it is possible to easily and reliably enable a function of each device of an apparatus by a single license key, even if the apparatus includes a plurality of devices.

With the apparatus according to the second aspect of the present invention, the second license key can be generated based on the information on the specified function, and it is possible to simply and reliably enable a function of each device by a single license key.

With the apparatus according to the third aspect of the present invention, the number information on the available devices is decremented each time a second license key is generated. Thus, it is possible to prevent generation of an unlimited number of second license keys.

With the apparatus according to the fourth aspect of the present invention, the authentication information is obtained in order to generate the second license key. Thus, it is possible to prevent generation of an unlimited number of second license keys and to improve security against unauthorized usage.

With the apparatus according to the fifth aspect of the present invention, the first device controls the second device. Thus, it is possible to efficiently operate the entire apparatus and to improve tolerance for design change of the apparatus.

With the apparatus according to the sixth aspect of the present invention, the first device and the second device control the air conditioning unit. Thus, it is possible to efficiently manage the air conditioning control and to improve tolerance for design change of the apparatus.

With the apparatus according to the seventh aspect of the present invention, the first license key is distributed for each specified function, and thus each function can be safely and easily traded between a user and the licenser.

With the apparatus according to the eighth aspect of the present invention, the key generation unit is provided independent from the key conversion unit. Thus, it is possible to improve security.

With the apparatus according to the ninth aspect of the present invention, the specific information on one device is obtained from another device. Thus, it is possible to further improve security.

With the network system according to the tenth aspect of the present invention, it is possible to easily and reliably enable a function of each device of an apparatus by a single license key, even if the apparatus includes a plurality of devices. Also, it is possible to prevent generation of an unlimited number of license keys and to improve security against unauthorized usage.

With the network system according to the eleventh aspect of the present invention, it is possible to efficiently and safely manage the air conditioning control.

With the method according to the twelfth aspect of the present invention, it is possible to easily and reliably enable a function of each device of an apparatus by a single license key, even if the apparatus includes a plurality of devices.

With the computer program according to the thirteenth aspect of the present invention, it is possible to easily and reliably enable a function of each device of an apparatus by a single license key, even if the apparatus includes a plurality of devices.

### BRIEF DESCRIPTION OF THE DRAWINGS

Figure 1 is an entire configuration diagram of a network system according to a first embodiment of the present invention.
Figure 2 is a schematic configuration diagram of a key generation unit according to the first embodiment of the present invention.
Figure 3 is a flow chart showing a process flow of the network system according to the first embodiment of the present invention.
Figure 4 is an entire configuration diagram of a network system according to a second embodiment of the present invention.
Figure 5 is a schematic configuration diagram of a key generation unit according to the second embodiment of the present invention.
Figure 6 is a flow chart showing a process flow of the network system according to the second embodiment of the present invention.

### EXPLANATION OF THE REFERENCE SYMBOLS

- 1,201: Network system
- 10, 210: Apparatus
- 11,211: Master device (first device)
- 11a, 211a: Key reverse conversion unit (key conversion means)
- 12,212: Slave device (second device)
- 13,213: Interface device (third device)
- 13 a, 213 a: Key input unit (key input means)
- 13b, 213b: Key generation unit (key generation means)
- 20, 220: Center (licenser)
- 31, 231: Slave device information
- 32: Slave device specific information

### BEST MODE FOR CARRYING OUT THE INVENTION

### <FIRST EMBODIMENT>

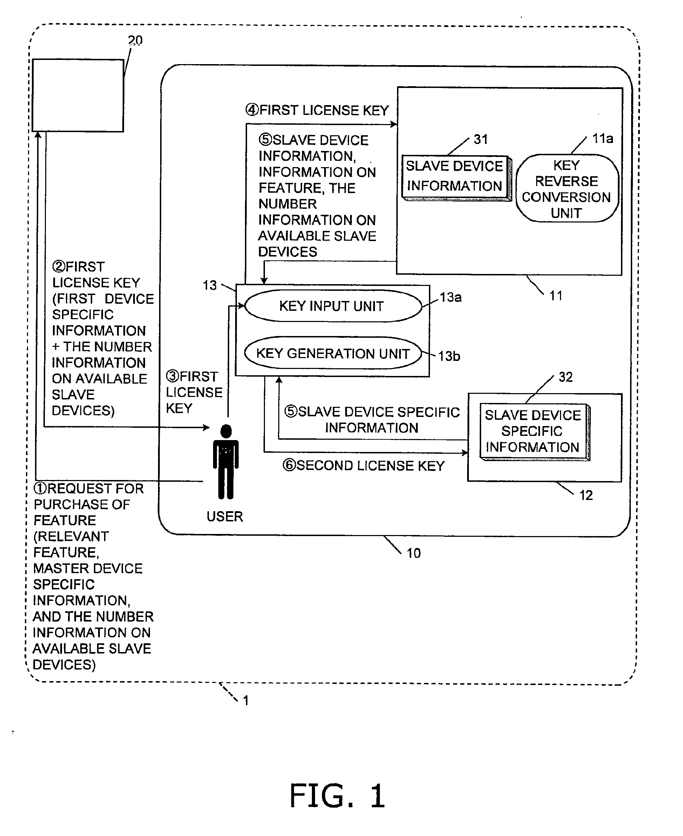

Figure 1 shows an entire configuration of a network system 1 according to a first embodiment of the present invention.

### <SCHEMATIC CONFIGURATION OF THE NETWORK SYSTEM>

As shown in Figure 1, the network system 1 mainly includes: an apparatus 10 includes a plurality of devices and configured to enable a function on each device; and a center 20 that is a licenser that distributes a license key for enabling the function. The apparatus 10 is managed by a user, and is provided such that it can communicate with the center 20 via the internet or the like. Here, to enable the function is to bring, for example, pre-installed or copied software into a usable state on each device (PC or the like).

When the center 20 receives a request from a user for purchase of a function (this request includes information regarding a function that the user desires to use (hereinafter referred to as "relevant function"), master device specific information, and the number information on available slave devices which are connected to the apparatus and on which the user intend to install the relevant function), the center 20 issues a first license key after a predetermined authentication procedure and distributes the first license key to the user of the apparatus 10 via predetermined communication means. The first license key is issued for each function. Specifically, the first license key is generated by being converted by a predetermined method such as encryption from information that specifies the relevant function (hereinafter referred to as "relevant function information"), master device specific information, and number information regarding the number of available slave devices (one in this embodiment).

### < SCHEMATIC CONFIGURATION OF THE APPARATUS>

The apparatus 10 includes a master device 11 that controls other devices, a slave device 12 that is controlled by the master device 11, and an interface device 13 that has a first license key input unit and a second license key generation unit. The devices constitute a local area network (LAN) so as to communicate with each other.

The master device 11 has a reverse conversion unit 11a that reversely converts the obtained first license key and obtains the relevant function information and information on the number of available slave devices. In addition, the master device 11 stores slave device information 31. The slave device information 31 includes information such as an IP address, a MAC address, and the like of the slave device 12 that is subject to control of the master device 11.

The slave device 12 stores slave device specific information 32, and transmits the specific information 32 upon a request from the interface device 13. In addition, the slave device 12 receives a second license key from the interface device 13, and the relevant function is enabled by the second license key. Note that the slave device specific information includes, for example, a serial number, a MAC address, and the like of the device.

The interface device 13 has a key input unit 13a and a key generation unit 13b. The key input unit 13a allows the user (or a service person on behalf of the user, the same below) to input the first license key. The key generation unit 13b generates the second license key that is a new license key from the relevant function information and the number information on the available slave devices obtained from the master device 11and the specific information obtained from the slave device 12. Then, the key generation unit 13b transmits the second license key to an IP address of the slave device 12.

### <SCHEMATIC CONFIGURATION OF THE KEY GENERATION UNIT>

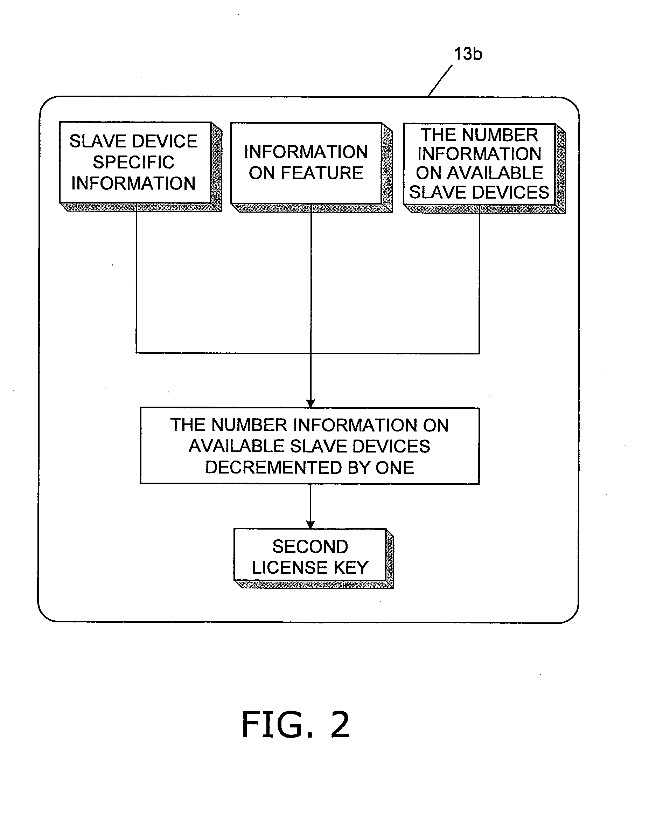

Figure 2 shows a schematic configuration of the key generation unit 13b. The key generation unit 13b generates a second license key from the relevant function information and the number information on the available slave devices obtained from the master device 11 and the slave device specific information obtained from the slave device 12. At this time, the number information on the available slave devices is decremented by one. Consequently, the number information on the available slave devices becomes 0.

### <OPERATION OF THE PROCESS BY THE NETWORK SYSTEM>

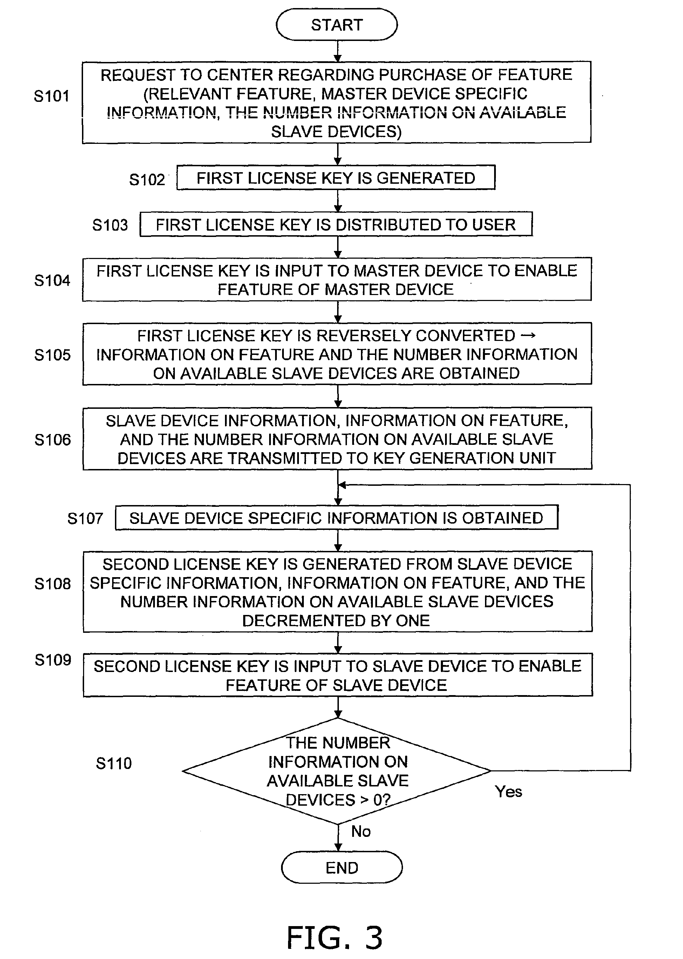

The process flow by the network system 1 according to the first embodiment is described based on the flow chart in Figure 3.

In step S101, the user makes a request to the center 20 regarding purchase of the relevant function. At this time, the user informs the center 20 of the relevant function, the master device specific information, and the number information on the available slave devices. In step S102, the center 20 generates a first license key by converting the information regarding the relevant function, the specific information on the master device 11, and the number information on the available slave devices, and distributes the first license key to the user in step S103. In step S104, the first license key is input to the master device 11 via the key input unit 13a. Accordingly, the relevant function is enabled on the master device 11.

In step S105, the key reverse conversion unit 11a of the master device 11 reversely converts the first license key and obtains the relevant function information and the number information on the available slave devices. In step S106, the above information and the slave device information 31 stored in advance in the master device 11 are transmitted to the key generation unit 13b of the interface device 13. In step S107, the interface device 13 makes an inquiry to the slave device 12, and obtains the slave device specific information 32. In step S108, the key generation unit 13b generates a second license key from the information that the key generation unit 13b obtained such as the slave device specific information and the information on the function, and also the number information on the available slave devices that have been decremented by one At this time, the number information on the available slave devices is decremented by one. Consequently, the number information on the available slave devices becomes 0.

In step S109, the second license key is input to the slave device 12, and the relevant function of the slave device 12 is enabled.

Next, in step S110, the key generation unit 13b judges whether or not the number information on the available slave devices is 0. In the case of this embodiment, the number information on the available slave devices is 0 due to the above descried process, and thus the process is terminated. If the number information on the available slave devices is not 0, in other words, if there is another slave device that is available but is not provided with a second license key in the apparatus 10, the process returns to step S107, and the same process is repeated until the number information on the available slave devices becomes 0.

Through the above described process, all the functions of the master device and the slave device can be enabled in common.

### <CHARACTERISTICS OF THE NETWORK SYSTEM ACCORDING TO THE FIRST EMBODIMENT>

### (1)

With the network system 1 according to this embodiment, it is possible to simply and reliably enable all the functions of the plurality of devices in the apparatus 10 with a single license key (the first license key).

### (2)

In the network system 1 according to this embodiment, the center 20 can enable all the functions of the plurality of devices in the apparatus 10 simply by issuing a single license key (the first license key), so that the issuing and registration work of the license key can be easily carried out.

### (3)

In the network system 1 according to this embodiment, the number information regarding the number of available slave devices is included in the second license key, and the number information is decremented by one each time a second license key is generated, Accordingly, no more second license keys can be generated when the number information on the available slave devices becomes 0. Thus, it is possible to prevent generation of an unauthorized license key.

### <ALTERNATIVE EMBODIMENT OF THE FIRST EMBODIMENT>

The network system according to this embodiment can also be applied to an air conditioning control system. In that case, the center 20 can be used as an air conditioning management center; and the master device, the slave device, and the interface device can be used as air conditioning control devices. Accordingly, for example, when a newer version of software is installed or when data is updated due to the introduction of a new air conditioner, modification of air conditioning facilities, or the like, each function can be easily and reliably enabled by the application of this embodiment.

### <SECOND EMBODIMENT>

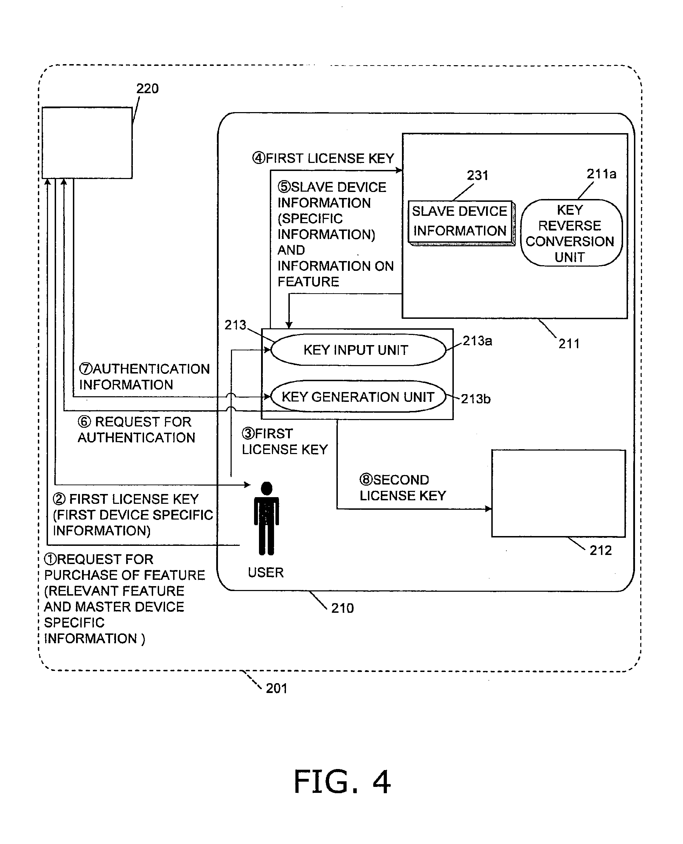

Figure 4 shows an entire configuration diagram of a network system 201 according to a second embodiment of the present invention. Major differences between this embodiment and the first embodiment are that a request for authentication is made to the center when the second license key is generated and that the slave device specific information is obtained from the master device.

### <SCHEMATIC CONFIGURATION OF THE NETWORK SYSTEM>

As shown in Figure 4, as in the first embodiment, the network system 201 is configured so as to mainly include: an apparatus 210 including a plurality of devices and configured to enable a function on each device; and a center 220 that is a licenser that distributes a license key for enabling the function. The apparatus 210 is managed by a user, and is provided such that it can communicate with the center 220 via the internet or the like.

As in the first embodiment, when the center 220 receives a request from a user regarding purchase of a function (this request includes information regarding the relevant function and master device specific information), the center 220 issues the first license key after a predetermined authentication procedure, and distributes the first license key to the user of the apparatus 210 via predetermined communication means. Note that the number information regarding the number of available slave devices is provided to the center 220 in advance and stored therein.

### <SCHEMATIC CONFIGURATION OF THE APPARATUS>

As in the first embodiment, the apparatus 210 includes a master device 211 that controls other devices, a slave device 212 that is controlled by the master device 211, and an interface device 213 that has a first license key input unit and a second license key generation unit. The devices constitute a local area network (LAN) so as to communicate with each other.

The master device 211 has a reverse conversion unit 211a that reversely converts an obtained first license key and obtains information on the function. In addition, the master device 211 stores slave device information 231.

Unlike the first embodiment, the slave device 212 does not transmit the slave device specific information 32 to the interface device 213.

The interface device 213 has a key input unit 213a and a key generation unit 213b. The key input unit 213a allows the user to input the first license key. The key generation unit 213b generates a second license key that is a new license key from the information on the function and slave device information (slave device specific information) which are obtained from the master device 211.

In addition, the key generation unit 213b performs user authentication with the center 220 when generating the second license key. Here, the user authentication is to check the information from the accessing apparatus 210 against the user information stored in the center 220 that includes, for example, user specific information, specific information on the user's device, information on the function that the user purchased or desires to purchase, number information regarding the number of available slave devices, and the like. The key generation unit 213b performs such user authentication and then judges whether or not it is acceptable to generate the second license key.

### <SCHEMATIC CONFIGURATION OF THE KEY GENERATION UNIT>

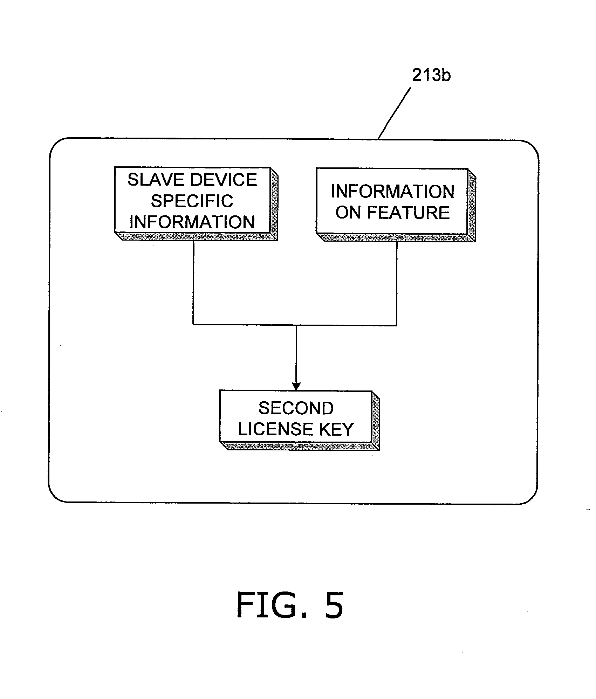

Figure 5 shows a schematic configuration of the key generation unit 213b. If the key generation unit 213b succeeded in user authentication, the key generation unit 213b generates the second license key from the information on the function and the specific information on the slave device 212 which are obtained from the master device 211.

### <OPERATION OF THE PROCESS BY THE NETWORK SYSTEM>

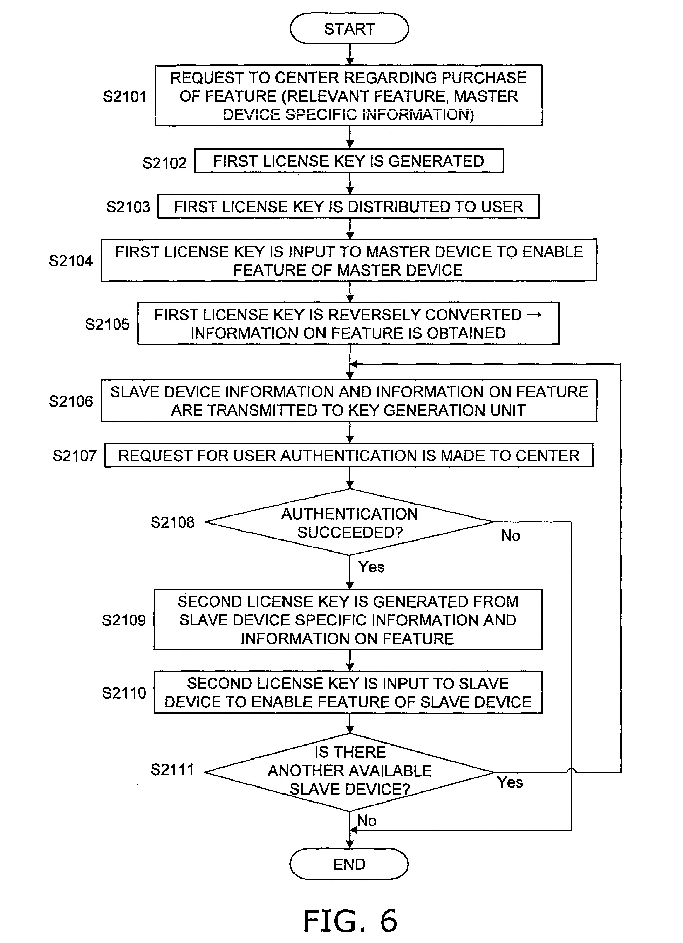

The process flow by the network system 201 according to the second embodiment is described based on the flow chart in Figure 6.

In step S2101, the user makes a request to the center 220 regarding purchase of the relevant function. At this time, the user informs the center 220 of the relevant function and the specific information on the master device 211. In step S2102, the center 220 generates a first license key by converting the information regarding the relevant function and the specific information on the master device 211, and then distributes the first license key to the user in step S2103. In step S2104, the first license key is input to the master device 211 via the key input unit 213a. Accordingly, the relevant function is enabled on the master device 211.

In step S2105, the key reverse conversion unit 211 a of the master device 211 reversely converts the first license key and obtains the relevant function information. In step S2106, the relevant function information and the slave device information 231 (including slave device specific information) stored in advance in the master device 211 are transmitted to the key generation unit 213b of the interface device 213. In step S2107, the interface device 213 makes a request to the center 220 for user authentication. In step S2108, whether or not user authentication succeeded is judged based on a reply from the center 220. If user authentication failed, the process is terminated. If user authentication succeeded, in step S2109, the key generation unit 213b generates a second license key from the slave device specific information and the relevant function information. In step S2110, the second license key is input to the slave device 212, and the relevant function of the slave device 212 is enabled.

Next, in step S2111, the key generation unit 13b judges whether or not there is another available slave device to which the second license key is not provided. This judgment may be made, for example, from information input by the user or information from the center 220. In this embodiment, because there is no other available slave device without the second license key, the process is terminated. If there is another available slave device without the second license key in the apparatus 210, the process returns to step S2106, and the same process is repeated until there is no other available slave device without the second license key.

Through the above described process, all the functions of the master device and the slave device can be enabled in common.

### <CHARACTERISTICS OF THE NETWORK SYSTEM ACCORDING TO THE SECOND EMBODIMENT>

### (1)

In the network system 201 according to this embodiment, in addition to the characteristics of the first embodiment, user authentication is performed between the apparatus 210 and the center 220 each time the key generation unit 213b generates a second license key. Thus, it is possible to prevent generation of an unauthorized license key and to improve security.

### (2)

In the network system 201 according to this embodiment, the specific information on the slave device 212 is obtained from the master device 211. Thus, for example, even if the slave device 212 is a device that was added in an unauthorized manner, it is possible to more reliably prevent unauthorized generation of the second license key.

### INDUSTRIAL APPLICABILITY

The present invention is useful as an apparatus, a network system, a method, and a computer program capable of easily and reliably enabling a function of each device by a single license key, even if such apparatus or network system includes a plurality of devices.

## Claims

1. An apparatus (10, 210) including a plurality of devices and configured to enable a specified function of a first device (11, 211) among the plurality of devices by a first license key distributed by a licenser (20, 220), the apparatus comprising:
a key input unit (13a, 213a) configured to allow the first license key to be input; and
a key generation unit (13b, 213b) configured to generate a second license key based on the first license key and specific information on a second device (12, 212) among the plurality of devices,
wherein
the specified function of the second device is enabled by the second license key.

2. The apparatus according to claim 1, comprising:
a key conversion unit (11a, 211a) configured to reversely convert the first license key that is input,
wherein
the first license key is generated based on information on the specified function and specific information on the first device (11, 211), and
the key conversion unit is configured to reversely convert the first license key that is input and read out the information on the specified function.

3. The apparatus according to claim 2, wherein
the first license key is generated further based on number information regarding the number of available devices,
the key conversion unit is configured to further read out the number information by the reverse conversion, and
the key generation unit (13b) is configured to decrement the number information to generate the second license key.

4. The apparatus according to claim 1, wherein
the key generation unit (213b) is configured to access the licenser (220) and obtain authentication information in order to generate the second license key.

5. The apparatus according to claim 1, wherein
the first device (11, 211) is configured to control the second device (12, 212).

6. The apparatus according to claim 5, wherein
the specified function relates to air conditioning control, and
the first device (11, 211) and the second device (12, 212) are configured to control an air conditioning unit.

7. The apparatus according to claim 1, wherein
the first license key is distributed for each specified function.

8. The apparatus according to claim 2, wherein
the key conversion unit (11a, 211 a) is provided to the first device (11, 211), and the key generation unit (13b, 213b) is provided to a third device (13, 213) other than the first device and the second device (12, 212).

9. The apparatus according to claim 1, wherein
the key generation unit (213b) is configured to obtain the specific information on the second device (212) from the first device (11).

10. A network system comprising;
the apparatus (10, 201) according to claim 1, and
the licenser (20, 220) capable of communicating with the apparatus,
wherein
the key generation unit (13b, 213b) is configured to access the licenser in order to generate the second license key, and
the licenser is configured to store user information of the apparatus and transmit authentication information to the key generation unit based on the user information.

11. A network system according to claim 10, wherein
the licenser (20, 220) is an air conditioning management center,
the apparatus (10, 210) is an air conditioning apparatus, and
the first device (11, 211) and the second device (12, 212) are configured to control an air conditioning unit.

12. A method for enabling a specified function of a first device (11, 211) among a plurality of devices by a first license key distributed by a licenser (20, 220), the method comprising:
a first step in which the first license key is input;
a second step in which a second license key is generated based on the first license key and specific information on a second device (12, 212) among the plurality of devices; and
a third step in which the specified function of the second device is enabled by the second license key.

13. A computer program for enabling a specified function of a first device (11, 211) among a plurality of devices by a first license key distributed by a licenser (20, 220), the computer program comprising:
a first step in which the first license key is input;
a second step in which a second license key is generated based on the first license key and specific information on a second device (12, 212) among the plurality of devices; and
a third step in which the specified function of the second device is enabled by the second license key.
